# EUROPEAN PATENT SPECIFICATION

(11) **EP 0 429 721 B1**
(45) Date of publication and mention of the grant of the patent: **07.06.1995**
(21) Application number: 89203054.5
(22) Date of filing: 01.12.1989
(51) Int. Cl.: A01F 15/14

(54) **Clutch assembly**
Kupplungsanordnung
Embrayage

(43) Date of publication of application: 05.06.1991
(73) Proprietor: NEW HOLLAND BELGIUM N.V., B-8210 Zedelgem (BE)
(72) Inventor: Naaktgeboren, Adrianus, B-8211 Zedelgem (Veldegem) (BE); Lippens, Christiaan A.C., B-9980 Sint-Laureins (BE)
(74) Representative: Vandenbroucke, Alberic

(56) References cited:
- EP-A- 0 072 606
- GB-A- 1 588 536
- GB-A- 2 155 399
- US-A- 2 333 007
- US-A- 2 897 748
- US-A- 4 503 762

## Description

This invention relates generally to clutch assemblies and, in particular, to clutch assemblies for tying mechanisms on agricultural balers.

In a conventional type of baler, a plunger reciprocates in a bale case to form crop material into rectangular bales. A tying mechanism comprising needles and knotters is provided to tie several strands of binding material such as twine around the bales. The knotters normally are mounted on a main transverse rotatable drive shaft, which is driven through one revolution during each tying cycle. To this end, a clutch assembly commonly is employed including, on the one hand, a first clutch part constantly driven by a power driven component of the baler and, on the other hand, a second clutch part connected to the drive shaft for actuating the tying mechanism.

The second clutch part includes a pivotally mounted pawl element which is spring-loaded to move into driving engagement with a cam lobe mounted on the constantly rotating first clutch part once a bale of predetermined length has been formed. Drive is then established between the first and second clutch parts causing the tying mechanism drive shaft to rotate through one complete revolution, whereafter the pawl element is urged to a retracted position, thereby disengaging the first clutch part from the second clutch part.

Over the past years, the above described clutch assembly has proved to be an effective means for driving the needles and operating the tying units of conventional square balers in an accurately timed relationship with the plunger. However, the situation is different with the advent of so-called medium size and large rectangular balers operable to produce bales of crop material weighing anywhere in the range of 200 to up to 1000 kg, as opposed to conventional small balers which are operable to produce bales typically weighing in the range of only 20 to 30 kg. It readily will be apreciated that, in order to be able to produce such heavy weight bales, not only the supporting structure of such medium size and large square balers should be oversized when compared to a conventional small baler, but also drive components and movable bale forming components should be sized accordingly. In particular, the needles employed on a medium size or large square baler are larger and as a result heavier than the needles of a conventional small baler. Also, since heavy weight bales are much more dense than the conventional small bales, several strands of twine are required to hold each bale together. This results in the use of four or more knotters, each cooperating with a heavy needle whereas a conventional small baler normally requires only two knotters and associated smaller and light weight needles. All this has resulted in a tying mechanism of considerable mass for use on a medium size or large square baler and which is set in motion during each tying cycle.

Under such conditions, when the pawl element of the second clutch part engages the moving cam lobe of the rotating first clutch part, an initial high peak starting load is exerted on the second clutch part and the drive shaft initiating movement of the needles and operation of the tying unit components. Once rotation of the second clutch part and the drive shaft, and therewith also movement of the needles and operation of the tying unit components have begun, the momemtum imparted thereto soon causes the second clutch part and shaft to rotate faster than the first clutch part, whereby the pawl element of the second clutch part overruns or advances out of engagement with the cam lobe of the first clutch part. However, the cam lobe on the first clutch part soon catches up with the pawl element of the second clutch part after the initial starting momentum imparted to the needles and tying unit components has been dissipated. When the cam lobe catches up with the pawl element and engages the latter again, a second peak load is exerted by the first clutch part on the second clutch part and the drive shaft before the tying cycle is completed. These successive peak loading and overrun conditions result in a momentary hesitation in the movement of the needles and in the operation of the tying units during each tying cycle. Such conditions cause increased wear on the drive shaft and on the components of the tying units and may ultimately result in tying malfunctions.

GB-A-1.588.536 already discloses means for preventing substantial overrun by the second clutch part relative to the first clutch part. According to this prior art arrangement, a clutch mechanism is provided including a first and second clutch part; the latter comprising a first, conventional pawl element for engaging the leading lug portion of a cam lobe on the first clutch part and an additional second pawl element which is operable, in an extended position, to engage the trailing lug portion of said cam lobe so as to prevent overrun by the second clutch part relative to the first clutch part during the clutching operation of the clutch assembly. Interengeable means between the first and second pawl elements are operable to cause movement of the second pawl element to a retracted position free of engagement with the cam lobe when the first pawl element is moved to its retracted position. The clutching mechanism disclosed in GB-A-1.588.536 however suffers from the drawback that it includes a fairly large number of components, which moreover require expensive machining. In addition, the interengeable means between the first and second pawl elements are subjected to wear which may cause the second pawl element to be incompletely retracted from the path of the rotating cam lobe when the clutch assembly is disengaged. This, of course, will lead to further wear of the second pawl element and the cam lobe. Furthermore, provisions are lacking for adjusting the clearance between the second pawl element and the trailing lug portion of the cam lobe when the former is in its extended position. A proper clearance nevertheless is highly needed considering that, on the one hand, too large a clearance will not prevent a substantial overrun from occurring, while, on the other hand, too small a clearance may prevent the second pawl element from taking its fully extended position for engaging the cam lobe trailing lug portion when the clutching mechanism is engaged.

It is therefore the objective of the present invention to provide in the drive means of an agricultural baler tying mechanism a clutch mechanism with fewer, less complicated parts which, moreover, more easily can be adjusted with respect to one another.

According to the present invention, a baler is provided which includes a bale length metering means, a tying mechanism and a drive transmission for said tying mechanism; said drive transmission including a clutch mechanism comprising :
- a rotatable driving clutch part conveying a cam lobe with leading and trailing lug portions thereon;
- a rotatable driven clutch part journalled coaxially with the driving clutch part; and
- first and second pawl assemblies, each mounted on the driven clutch part for movement between retracted and extended positions such that, in their respective extended positions, the first pawl assembly is disposed so as to be engaged and driven by the leading lug portion while the second pawl assembly is disposed for engagement with the trailing lug portion so as to restrict overrun by the driven clutch part relative to the driving clutch part and, in their respective retracted positions, the first and second pawl assemblies are withdrawn so as to be incapable of engagement with the respective lug portions; the first pawl assembly being operatively associated with the bale length metering means such that said metering means, on the one hand, maintain said first pawl assembly in its retracted position until a bale of predetermined length is formed and, on the other hand, move said first pawl assembly to its extended position upon said bale reaching said predetermined length and, the second pawl assembly being movable from its retracted position towards its extended position upon the first pawl assembly operatively interconnecting the driving and driven clutch parts.

The invention is characterized in that the second pawl assembly is independent from the first pawl assembly and is disposed so as to move towards its extended position independently from the first pawl assembly upon said first pawl assembly operatively interconnecting the driving and driven clutch parts.

When the first pawl assembly operatively interconnects the driving clutch part to the driven clutch part, the second pawl assembly is urged from its retracted position towards its extended position under influence of a combination of gravitational forces and centrifugal forces generated by the rotational movement of the driven clutch part.

The clutch mechanism according to the invention advantageously can be used, in general, on agricultural balers comprising a tying mechanism and a drive transmission therefore, and, in particular, on so-called medium size and large square balers.

A clutch mechanism incorporating the present invention will now be described, by way of example, with reference to the accompanying drawings, in which :
Figure 1 is a side elevation view of a baler comprising a clutch mechanism according to the present invention;
Figure 2 is an enlarged view of a portion of the baler of Figure 1;
Figure 3 is a detailed cross-sectional view of the preferred embodiment of the present invention; and
Figure 4 is a view similar to Figure 3, but taken at a different stage in the operation of the clutch mechanism.

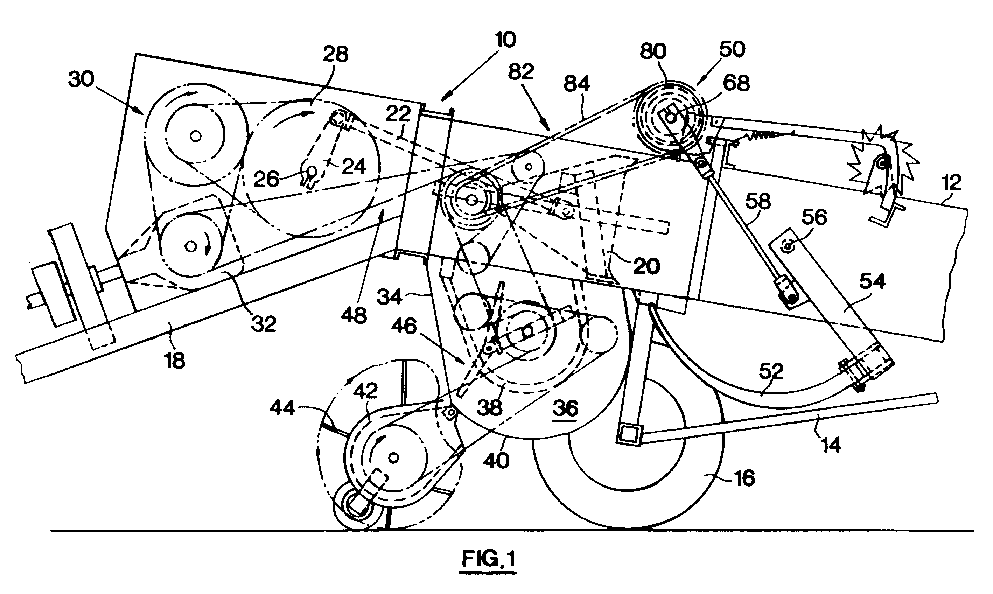

Referring to Figure 1, a baler 10 includes a bale case 12 mounted on a frame 14 which is supported by wheels 16. A tongue 18 extends forwardly from the bale case 12 for attachment to a tractor (not shown). A plunger 20 is reciprocably disposed in the bale case 12 to form crop material into rectangular bales. The plunger 20 is attached by a connecting rod 22 to a crank arm 24 fixed to a shaft 26 on which a sprocket 28 is fixedly mounted. A drive transmission, generally indicated at 30, drivingly couples the sprocket 28 to a gear box 32, which is adapted for connection to the PTO of a tractor (not shown). During operation of the baler 10, the sprocket 28 is rotated in a clockwise direction, as viewed in Figure 1, in order to cause reciprocation of the plunger 20 in a fore-and-aft direction in the bale case 12.

A feed chamber 34 is mounted underneath the bale case 12 and includes a curved duct 36 having top and bottom walls 38 and 40, respectively, and sidewalls. The curved duct 36 is open at its lower end and at its upper end and communicates at its upper end with an inlet opening formed in the bottom wall of the bale case 12. A pickup device 42 of a conventional type is pivotally connected to the feed chamber 34 and includes a plurality of fingers 44 which are rotatable in the direction indicated in Figure 1 for lifting crop material from the ground and delivering it towards the feed chamber 34.

A feeder mechanism 46 is provided in the feed chamber 34 for moving crop material from the pickup device 42 into the bale case 12 through the inlet opening in the bottom wall thereof. The pickup device 42 and feeder mechanism 46 are operated by a further drive transmission 48 extending from the gear box 32.

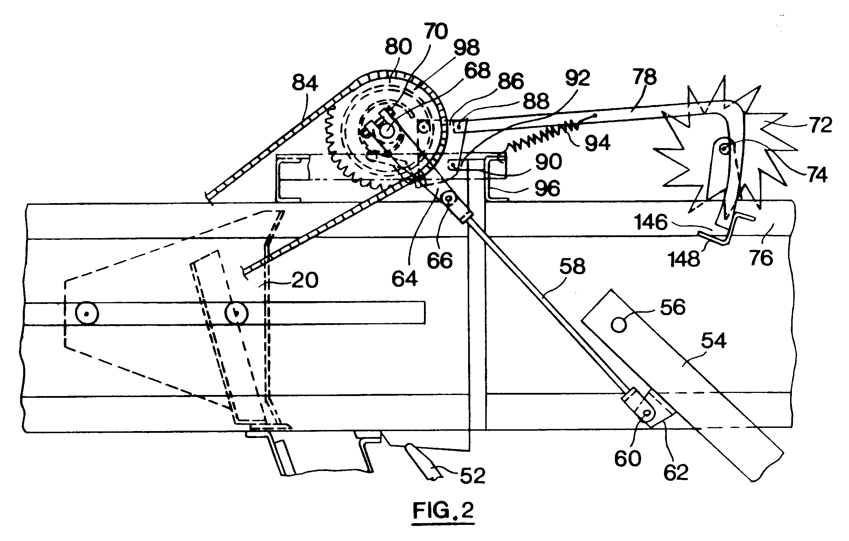

The baler 10 includes a tying system, generally indicated at 50, for tying several strands of twine around a completed bale. This tying system inludes a plurality of side-by-side conventional knotters (not shown) mounted above the bale case 12 and a plurality of needles 52 (of which only the left-hand one is seen in Figure 1) mounted below the bale case 12. The needles 52 are carried by a yoke 54 which is pivotally mounted on stub shafts 56 carried on the opposite sides of the bale case 12. Forward movement of the yoke 54 projects the needles 52 upwardly through the bale case 12 and delivers strands of twine carried by the needles 52 to the conventional knotters. As best seen in Figure 2, a link 58 is pivotally connected at one end by a pin 60 to a bracket 62 carried on the yoke 54. The other end of the link 58 is pivotally connected by a pin 66 to a crank arm 64, which in turn is clamped to a shaft 68 by a bolt 70. A tripping device for actuating the tying system includes a starwheel 72 fixed on a shaft 74 rotatably supported above the upper corner rails 76 of the bale case 12. The tripping device further includes an arm member 78 operatively coupled to the shaft 74 in a conventional manner, such as disclosed in US-A-2.897.748.

The shaft 68, already mentioned, is rotatably supported at its ends above the bale case 12 and freely rotatably carries a sprocket 80. A still further drive transmission 82 receives motive power from the grearbox 32 and comprises a chain 84 which extends around the sprocket 80. The shaft 68 is rotated through 360° during each tying cycle and causes the needles 52 to be moved in and out of the bale case 12 as explained hereabove. The knotters (not shown), which are driven by the shaft 68, form knots in the strands of twine delivered by the needles 52.

Referring now to Figures 2, 3 and 4, it will be seen that the arm member 78 has a plate 86 pivoted thereto at its forward end by a pin 88. The plate 86 itself in turn is pivoted on a pin 90 carried on a frame member 92 of the bale case 12. A spring 94 is connected between the arm member 78 and a transverse beam 96 on the bale case 12 to urge the arm member 78 in a forward direction relative to the bale case 12.

The reciprocation of the plunger 20 and each revolution of the drive shaft 68 are accurately timed so that the needles 52 are projected across and then retracted from the bale case 12 in a manner such that the tying operation is completed during the interval between the last rearward working stroke of the plunger which completed the bale being tied and the next successive rearward working stroke of the plunger which starts the formation of the next bale in the bale case 12.

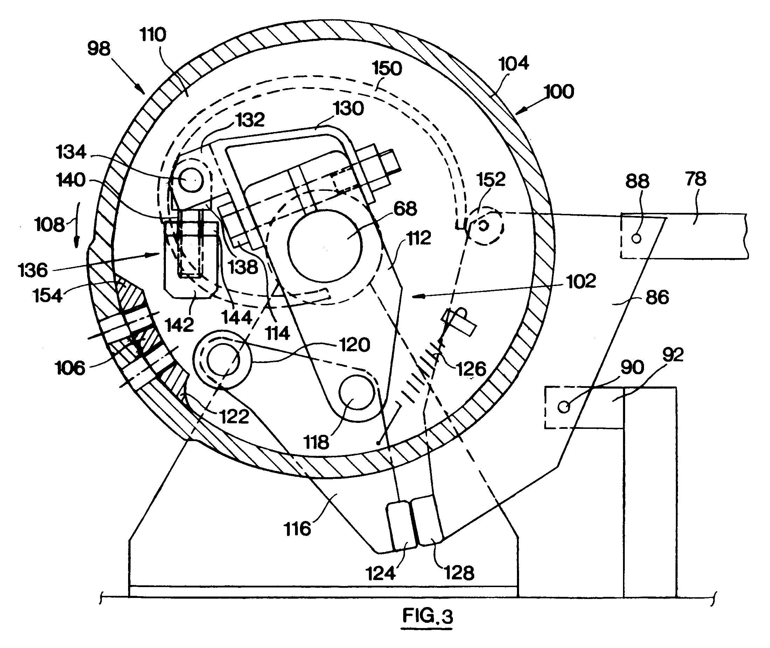

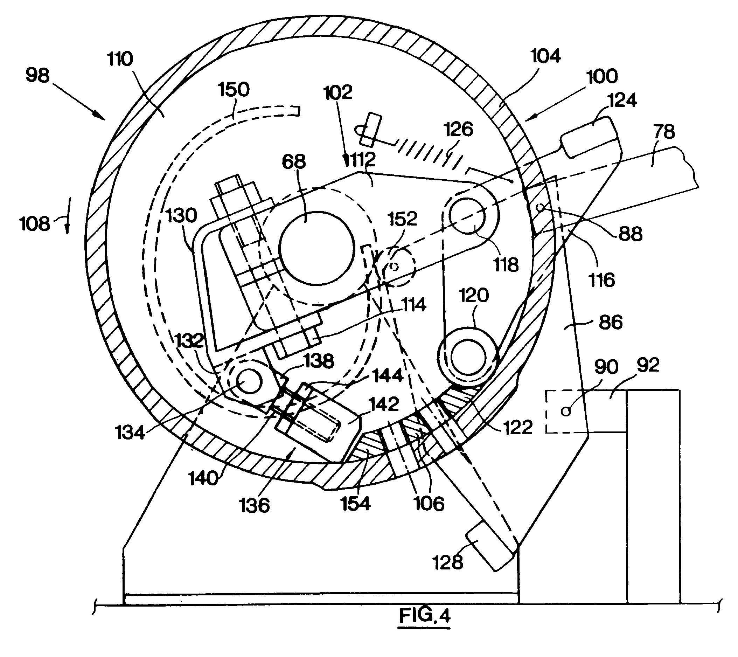

The timing referred to hereabove is obtained by a clutch assembly 98 which drives the drive shaft 68 through one revolution during each tying cycle. Referring specifically to Figures 3 and 4, the clutch assembly 98 is composed, on the one hand, of a rotatable, driving clutch part 100 rotatably journalled on the shaft 68 and, on the other hand, a rotatable, driven clutch part 102 which is secured to the shaft 68 for rotation therewith. The driving clutch part 100 comprises a hub 104, which is shown in cross-section in Figures 3 and 4 and which is bolted to the sprocket 80 whereby it is constantly driven during operation of the baler 10. The hub 104 has a cam lobe 106 bolted to its inner surface and is rotated in the direction indicated by the arrow 108. The driven clutch part 102 comprises a disk 110 which extends coaxially with the shaft 68 behind the hub 104. A further hub 112 is rigidly connected to a central portion of the disk 110 and has a central bore formed therethrough for receiving the drive shaft 68. The further hub 112 is clamped to the shaft 68 by a bolt 114. A first pawl assembly 116 is pivoted at 118 on one end of the hub 112; the first pawl assembly 116 carrying a roller 120 at one end for engagement with a leading lug portion 122 of the cam lobe 106 on the hub 104. The end of the pawl assembly 116 opposite the roller 120 is formed with a tab 124. A spring 126 is connected between the pawl assembly 116 and the disk 110 to urge the pawl assembly 116 in a counter-clockwise direction about pivot 118 as viewed in Figure 3. The plate 86 carries a tab 128 disposed to engage the tab 124 on the pawl assembly 116.

The end of the hub 112 opposite to the first pawl assembly 116 is provided with a generally U-shaped bracket 130 which is clamped thereto by means of the bolt 114 already mentioned. Two spaced apart ears or lugs 132 are rigidly secured to the bracket 130 near the base of one of the upstanding arms thereof. Each lug 132 comprises an aperture; the respective apertures being aligned with one another for rotatably receiving a pivot pin 134 which carries a second pawl assembly 136. As can be observed in Figure 3, the second pawl assembly 136 includes a member 138 fixedly secured to the pivot pin 134; this member 138 being provided with a threaded rod end 140 onto which a cube-like tab 142 is screwed. A check nut 144 prevents the tab 142 from becoming loose from the rod 140.

In operating the baler 10, crop material is delivered into the bale case 12 by the feeder mechanism 46 where it is then compressed into bales by the plunger 20. As a bale is being formed, the arm 78 is in the position shown in Figures 2 and 3 so that the tab 128 on the plate 86 engages the tab 124 on the first pawl assemby 116. This holds the pawl assembly 116 in a drive interrupting position in which the roller 120 is out of the path of movement of the cam lobe 106 on the hub 104 which is rotated continuously. Consequently, the disk 110 and the shaft 68 are stationary and the knotters are idle for the time being.

When a bale has reached the desired length, the starwheel 72 and the shaft 74 will have rotated far enough to cause the arm 78 to be pivoted upwardly about the pin 88 to a point where the slot 146, which is defined between the end of the arm 78 and a bracket 148 which is attached thereto, receives the shaft 74. The arm 78 is then moved forwardly with respect to the bale case 12 by the spring 94, thereby resulting in rotation of the plate 86 about the pin 90 to the position shown in Figure 4 where the tab 128 on the plate 86 is out of engagement with the tab 124 on the pawl assembly 116. The spring 126 immediately urges the pawl assembly 116 to rotate in a counterclockwise direction about pivot 118 towards a drive engaging position. This tripping action usually occurs when the baler plunger 20 is performing a compaction stroke as at this point in the cycle a last charge of crop material is added to the bale under formation whereby the desired length of the bale is obtained. Inward and outward pivoting or rocking movement of the first pawl assembly 116 relative to the driven clutch part 102 is restricted respectively by the hub 112 which limits radially inward movement of the roller 120 on the one hand and by the inner periphery of the hub 104 of the driving clutch part 100 on the other hand.

In the drive engaging position of the first pawl assemby 116, the roller 120 is diposed in the path of movement of the arcuate leading lug portion 122 of the cam lobe 106 provided on the driving clutch part 100 such that driving engagement occurs between the roller 120 and the lug portion 122. Consequently, the driven clutch part 102 is rotated in unison with the driving clutch part 100.

It readily will be appreciated that driving engagement between the clutch parts 100 and 102 will continue as long as the first pawl assembly 116 occupies its position in which the roller 120 engages the cam lobe 106. The disk 110 however carries a cam track 150 which engages a roller 152 on the plate 86 as the disk 110 is rotated. This serves to reset the arm 78 to the position shown in Figure 2 before one full (360°) revolution of the driven clutch part 102 is completed. As a result, the tab 128 on the plate 86 is returned to the position shown in Figure 3 in the path of movement of the pawl assembly tab 124, so that, upon the driven clutch part 102 completing said one full revolution the tab 128 re-engages the tab 124. This returns the pawl assembly 116 to its drive interrupting position.

The second pawl assembly 136 is provided to minimize the amount by which the driven clutch part 102 can overrun the driving clutch part 100 during said single revolution. In case the second pawl assembly 136 would not be provided, inertia forces would cause the driven clutch part 102 to run faster than the driving clutch part 100 during portions of the single revolution of the shaft 68. Indeed, it has been experienced that, once the knotters and needle yoke 54 representing a considerable mass, have been set in motion, the momentum of these components is such that the shaft 68 connected thereto is driven thereby instead of being driven by the driving clutch part 100. Due thereto, the first pawl assembly roller 120 disengages from the cam lobe leading lug portion 122 by running ahead thereof. It will be appreciated however that once said momentum is being dissipated, the cam lobe 106 catches up with the roller 120 resulting in a second engagement speeding up the tying mechanism 50 again. The above phenomenon may repeat itself more than once during the single revolution of the shaft 68 resulting in a fluctuating drive speed of the whole tying system 50; a fluctuation which is highly undesirable as the risk for tying malfunctions is increased thereby. In order to overcome this drawback, the second pawl assembly 136 has been provided in a manner as will be explained hereafter.

When the driven clutch part 102 is held stationary, the second pawl assembly 136 occupies a retracted position, out of the path of movement of the cam lobe 106, as can be observed in Figure 3. Since the pivot pin 134 carrying the second pawl assembly 136 is freely rotatably supported in the lugs 132, the second pawl assembly 136 hangs down from the pin 134 due to the gravitation acting thereon, at least as long as the driven clutch part 102 is not set in motion. Upon the first pawl assembly 116 transmitting drive to the driven clutch part 102, the disk 110 and all parts connected thereto start to rotate in the direction of arrow 108, causing the second pawl assembly 136 to swing outwardly towards an extended position. This swinging movement of the second pawl assembly 136 initally is induced by the tab 142 tending to remain in a vertical position under influence of the gravitation, while its carrying structure is moved relative thereto. In addition thereto however and due to the driven clutch part 102 being set in motion, centrifugal forces start to prevail over the gravitation and further induce the outward pivoting movement of the second pawl assembly 136 towards the hub 104. These centrifugal forces maintain the second pawl assembly 136 in its extended position for the remaining part of the full cycle revolution of the shaft 68. The extended position of the pawl assemby 136 is represented in Figure 4, picturing the clutch assembly 98 at a 90° angular displacement after the drive connection between the respective clutch parts 100, 102 has been established.

At the extended position of the second pawl assembly 136, a slight clearance is present between the tab 142 and a flat trailing surface on the trailing lug portion 154 so that engagement will only occur between the second pawl assembly 136 and the trailing lug portion 154 if the driven clutch part 102 runs ahead of (i.e. overruns) the driving clutch part 100. The desired clearance easily can be preset by adjusting the position of the tab 142 on the rod end 140. Said adjustment is necessary in order to ensure a free rocking movement of the second pawl assembly 136 completely behind the cam lobe trailing lug portion 154 as seen in the direction of arrow 108 upon the first pawl assembly 116 engaging the leading lug portion 122. Thus, the clearance shown in Figure 4 between the tab 142 and the flat surface on the trailing lug portion 154 represents the small amount by which the driven clutch part 102 may overrun the driving clutch part 100. Such small amount of overrun has no adverse effect on the smooth operation of the tying mechanism and the needles.

Limits upon the angular or rocking movement of the second pawl assembly 136 relative to the driven clutch part 102 are established on the one hand by the head of the bolt 114, which limits radially inward movement of the second pawl assembly 136, and on the other hand, by the inner periphery of the hub 104 of the driving clutch part 100.

Upon the first pawl assembly tab 124 contacting the tab 128 on the plate 86 after a full revolution of the shaft 68, the drive connection between the respective clutch parts 100, 102 is interrupted so that the driven clutch part 102 stops rotating. Consequently, the centrifugal forces on the second pawl assembly 136 cease to exist, enabling the same to return to the position shown in Figure 3 and which is out of the path of movement of the continuously rotating cam lobe 106.

From what precedes, it will be appreciated that, in accordance with an important aspect of the present invention, the first pawl assembly 116 is independent from the second pawl assembly 136. As a result, the clearance existing between the second pawl assembly tab 142 and the cam lobe trailing lug portion 154 upon the respective clutch parts 100, 102 being interconnected, easily can be adjusted without any influence on the first pawl assembly 116.

The foregoing description illustrates a preferred embodiment of the invention. However, concepts employed may, based upon such description, be employed in other embodiments without departing from the scope of the claims. It e.g. is conceivable that the second pawl assembly 136 is urged to its extended position by structural means such as a cam track mechanism for example while being retracted by spring means; the only requirement being that the second pawl assembly 136 is independent from the first pawl assembly 116.

## Claims

1. A baler (10) including a bale length metering means (72), a tying mechanism (50) and a drive transmission (82) for said tying mechanism (50); said drive transmission (82) including a clutch mechanism (98) comprising :
- a rotatable driving clutch part (100) carrying a cam lobe with leading and trailing lug portions (122 resp. 154) thereon;
- a rotatable driven clutch part (102) journalled coaxially with the driving clutch part (100); and
- first and second pawl assemblies (116, resp. 136), each mounted on the driven clutch part (102) for movement between retracted and extended positions such that, in their respective extended positions, the first pawl assembly (116) is disposed so as to be engaged and driven by the leading lug portion (122) while the second pawl assembly (136) is disposed for engagement with the trailing lug portion (154) so as to restrict overrun by the driven clutch part (102) relative to the driving clutch part (100) and, in their respective retracted positions, the first and second pawl assemblies (116, resp. 136) are withdrawn so as to be incapable of engagement with the respective lug portions (122, resp. 154); the first pawl assembly (116) being operatively associated with the bale length metering means (72) such that said metering means (72), on the one hand, maintain said first pawl assembly (116) in its retracted position until a bale of predetermined length is formed and, on the other hand, move said first pawl assembly (116) to its extended position upon said bale reaching said predetermined length and, the second pawl assembly (136) being movable from its retracted position towards its extended position upon the first pawl assembly (116) operatively interconnecting the driving and driven clutch parts (100, resp. 102); and
said baler being characterized in that :
the second pawl assembly (136) is independent from the first pawl assembly (116) and is disposed so as to move towards its extended position independently from the first pawl assembly (116) upon said first pawl assembly (116) operatively interconnecting the driving and driven clutch parts (100, resp. 102).

2. A baler (10) according to claim 1, characterized in that the second pawl assembly (136) is disposed so as to move towards its extended position under influence of centrifugal forces generated by rotational movement of the driven clutch part (102) upon the first pawl assembly (116) operatively interconnecting the driving and driven clutch parts (100, resp. 102).

3. A baler (10) according to claim 2, characterized in that the driving and driven clutch parts (100, resp. 102) and the second pawl assembly (136) are disposed such that, upon the first pawl assembly (116) operatively interconnecting the driving and driven clutch parts (100, resp. 102), the second pawl assembly (136) additionally is subjected to gravitational forces urging said second pawl assembly (136) from its retracted towards its extended position.

4. A baler (10) according to claim 3, characterized in that the driving and driven clutch parts (100, resp. 102) and the second pawl assembly (136) are disposed such that, upon the first pawl assembly (116) operatively disconnecting the driving and driven clutch parts (100, resp. 102), the second pawl assembly (136) is urged from its extended towards its retracted position under influence of gravitational forces.

5. A baler (10) according to claim 1, characterized in that the clutch mechanism (98) comprises structural means for urging the second pawl assembly (136) towards its extended and retracted positions.

6. A baler (10) according to claim 5, characterized in that the structural means comprise a cam track mechanism and spring means disposed to urge the second pawl assembly (136) towards its extended position, respectively its retracted position.

7. A baler (10) according to any of the preceding claims characterized in that the second pawl assembly (136) comprises a tab (142) which is engageable with the trailing lug portion (154) when said second pawl assembly (136) is in its extended position.

8. A baler (10) according to claim 7 characterized in that the tab (142) is connected, via an interconnecting member (138), to a pivot pin (134) which is freely rotatably supported on the driven clutch part (102).

9. A baler (10) according to claim 8 characterized in that the tab (142) is adjustably mounted on the interconnecting member (138).

## Patentansprüche

1. Ballenpresse (10) mit einer Ballenlängen-Meßeinrichtung (72), mit einem Bindemechanismus (50) und mit einem Antriebsstrang (82) für den Bindemechanismus (50), wobei der Antriebsstrang (82) einen Kupplungsmechanismus (98) mit folgenden Teilen einschließt:
- einen drehbaren antreibenden Kupplungsteil (100), der eine Nockenkeule mit voreilenden und nacheilenden Anschlagteilen (122 bzw. 154) daran trägt,
- einen drehbaren angetriebenen Kupplungsteil (102), der koaxial zu dem antreibenden Kupplungsteil (100) drebar gelagert ist, und
- erste und zweite Sperrklinkenanordnungen (116 bzw. 136), die jeweils auf dem angetriebenen Kupplungsteil (102) für eine Bewegung zwischen zurückgezogenen und ausgefahrenen Positionen derart befestigt sind, daß in ihren jeweiligen ausgefahrenen Positionen die erste Sperrklinkenanordnung derart angeordnet ist, daß sie mit dem voreilenden Anschlagteil (122) in Eingriff steht und von diesem angetrieben wird, während die zweite Sperrklinkenanordnung (136) für einen Eingriff mit dem nacheilenden Anschlagteil (154) angeordnet ist, um auf diese Weise einen Vorlauf des angetriebenen Kupplungsteils (102) gegenüber dem antreibenden Kupplungsteil (100) zu beschränken, während in ihren jeweiligen zurückgezogenen Stellungen die ersten und zweiten Sperrklinkenanordnungen (116 bzw. 136) zurückgezogen sind, so daß sie nicht mit den jeweiligen Anschlagteilen (122 bzw. 154) in Eingriff kommen können, wobei die erste Sperrklinkenanordnung (116) betriebsmäßig mit der Ballenlängen-Meßeinrichtung (72) derart verbunden ist, daß die Meßeinrichtung (72) einerseits die erste Sperrklinkenanordnung (116) in ihrer zurückgezogenen Stellung hält, bis ein Ballen mit einer vorgegebenen Länge gebildet wurde, und andererseits die erste Sperrklinkenanordnung (116) in ihre ausgefahrene Position bewegt, wenn der Ballen die vorgegebene Länge erreicht, während die zweite Sperrklinkenanordnung (136) aus ihrer zurückgezogenen Stellung in Richtung auf die ausgefahrene Stellung beweglich ist, wenn die erste Sperrklinkenanordnung (116) betriebsmäßig die antreibenden und angetriebenen Kupplungsteile (100 bzw. 102) miteinander verbindet, und wobei die Ballenpresse dadurch gekennzeichnet ist, daß
die zweite Sperrklinkenanordnung (136) unabhängig von der ersten Sperrklinkenanordnung (116) ist und derart angeordnet ist, daß sie sich unabhängig von der ersten Sperrklinkenanordnung (116) in ihre ausgefahrene Position bewegt, wenn die erste Sperrklinkenanordnung (116) betriebsmäßig die antreibenden und angetriebenen Kupplungsteile (100 bzw. 102) miteinander verbindet.

2. Ballenpresse (10) nach Anspruch 1,
dadurch gekennzeichnet, daß die zweite Sperrklinkenanordnung (136) derart angeordnet ist, daß sie sich in ihre ausgefahrene Stellung unter der Einwirkung von Zentrifugalkräften bewegt, die durch die Drehbewegung des angetriebenen Kupplungsteils (102) erzeugt werden, wenn die erste Sperrklinkenanordnung (116) die antreibenden und angetriebenen Kupplungsteile (100 bzw. 102) betriebsmäßig miteinander verbindet.

3. Ballenpresse (10) nach Anspruch 2,
dadurch gekennzeichnet, daß die antreibenden und angetriebenen Kupplungsteile (100 bzw. 102) und die zweite Sperrklinkenanordnung (136) derart angeordnet sind, daß, wenn die erste Sperrklinkenanordnung (116) die antreibenden und angetriebenen Kupplungsteile (100 bzw. 102) betriebsmäßig miteinander verbindet, die zweite Sperrklinkenanordnung (136) zusätzlich Schwerkräften ausgesetzt ist, die die zweite Sperrklinkenanordnung (136) aus ihrer zurückgezogenen Position in ihre ausgefahrene Position drücken.

4. Ballenpresse (10) nach Anspruch 3,
dadurch gekennzeichnet, daß die antreibenden und angetriebenen Kupplungsteile (100 bzw. 102) und die zweite Sperrklinkenanordnung (136) derart angeordnet sind, daß, wenn die erste Sperrklinkenanordnung (116) die antreibenden und angetriebenen Kupplungsteile (100 bzw. 102) betriebsmäßig voneinander entkuppelt, die zweite Sperrklinkenanordnung (136) unter dem Einfluß von Schwerkräften aus ihrer ausgefahrenen Stellung in ihre zurückgezogene Stellung gedrückt wird.

5. Ballenpresse (10) nach Anspruch 1,
dadurch gekennzeichnet, daß der Kupplungsmechanismus (28) Bauteile zum Drücken der zweiten Sperrklinkenanordnung (136) in Richtung auf ihre ausgefahrenen und zurückgezogenen Stellungen umfaßt.

6. Ballenpresse (10) nach Anspruch 5,
dadurch gekennzeichnet, daß die Bauteile einen Nockenbahn-Mechanismus und Federeinrichtungen umfassen, die so angeordnet sind, daß sie die zweite Sperrklinkenanordnung (136) in ihre ausgefahrene Position bzw. in ihre zurückgezogene Position drücken.

7. Ballenpresse nach einem der vorhergehenden Ansprüche,
dadurch gekennzeichnet, daß die zweite Sperrklinkenanordnung (136) einen Ansatz (142) aufweist, der mit dem nacheilenden Anschlagteil (154) in Eingriff bringbar ist, wenn sich die zweite Sperrklinkenanordnung (136) in ihrer ausgefahrenen Position befindet.

8. Ballenpresse (10) nach Anspruch 7,
dadurch gekennzeichnet, daß der Ansatz (142) über ein Verbindungsteil (138) mit einem Schwenkzapfen (134) verbunden ist, der frei drehbar auf dem angetriebenen Kupplungsteil (102) gehaltert ist.

9. Ballenpresse (10) nach Anspruch 8,
dadurch gekennzeichnet, daß der Ansatz (142) in einstellbarer Weise auf dem Verbindungsteil (138) befestigt ist.

## Revendications

1. Ramasseuse-presse (10) comprenant un moyen de mesurer la longueur des balles (72), un mécanisme noueur (50) et une transmission (82) pour le dit mécanisme noueur (50) ; la dite transmission (82) comportant un mécanisme d'embrayage (98) comprenant :
- un élément d'embrayage menant rotatif (110) portant un bossage de came sur lequel on trouve des parties de barrette menantes et menées (122 et 154 respectivement);
- un élément d'embrayage mené rotatif (102) pivoté coaxialement avec l'élément d'embrayage menant (100); et
- un premier et un second ensemble à cliquet (116 et 136 respectivement) montés chacun sur l'élément d'embrayage mené (102) pour passer de positions de retrait à des positions d'allongement de manière à ce que dans leurs positions de retrait et d'allongement respectives, le premier ensemble à cliquet soit disposé de manière à être engagé et commandé par la partie de barrette menante (122), tandis que le second ensemble à cliquet est disposé de manière à s'engager avec la partie de barrette menée (154) de manière à restreindre la surcourse de l'élément d'embrayage mené (102) relativement à l'élément d'embrayage menant (100) et, dans leurs positions de retrait respectives, le premier et le second ensemble à cliquet (116 et 136 respectivement) sont rétractés de manière à ne pouvoir engager les parties de barrettes respectives (122 et 154 respectivement) ; le premier ensemble à cliquet (116) étant associé fonctionnellement avec le moyen de mesure de la longueur des balles (72) de manière à ce que le dit moyen de mesure (72), d'une part, maintienne le dit premier ensemble à cliquet (116) dans sa position de retrait, jusqu'à la formation d'une balle de longueur prédéterminée et amène, d'autre part, le dit premier ensemble à cliquet (116) dans sa position d'allongement lorsque la dite balle atteint sa longueur prédéterminée et à ce que le second ensemble à cliquet (136) soit déplacable de sa position de retrait vers sa position d'allongement lorsque le premier ensemble à cliquet (116) relie fonctionnellement les éléments d'embrayage menant et mené (100 et 102 respectivement) ;
la dite ramasseuse-presse étant caractérisée en ce que :
le second ensemble à cliquet (136) est indépendant du premier ensemble à cliquet (116) et est disposé de manière à se déplacer vers sa position d'allongement indépendamment du premier ensemble à cliquet (116) lorsque le dit premier ensemble à cliquet (116) relie fonctionnellement les éléments d'embrayage menant et mené (100 et 102 respectivement) ;

2. Ramasseuse-presse (10) selon la revendication 1, caractérisée en ce que le second ensemble à cliquet (136) est disposé de manière à se déplacer vers sa position d'allongement sous l'influence des forces centrifuges générées par le mouvement de rotation de l'élément d'embrayage mené (102) sur le premier ensemble à cliquet (116) reliant fonctionnellement les éléments d'embrayage menant et mené (100 et 102 respectivement).

3. Ramasseuse-presse (10) selon la revendication 2, caractérisée en ce que les éléments d'embrayage menant et mené (100 et 102 respectivement) et le second ensemble à cliquet (136) sont disposés de manière que lorsque le premier ensemble à cliquet (116) relie fonctionnellement les éléments d'embrayage menant et mené (100 et 102 respectivement), le second ensemble à cliquet (136) est soumis, en outre, à des forces gravitationnelles poussant le dit second ensemble à cliquet (136) de sa position en retrait vers sa position d'allongement.

4. Ramasseuse-presse (10) selon la revendication 3, caractérisée en ce que les éléments d'embrayage menant et mené (100 et 102 respectivement) et le second ensemble à cliquet (136) sont disposés de manière que lorsque le premier ensemble à cliquet (116) déconnecte fonctionnellement les éléments d'embrayage menant et mené (100 et 102 respectivement), le second ensemble à cliquet (136) est poussé de sa position d'allongement vers sa position en retrait sous l'influence de forces gravitationnelles.

5. Ramasseuse-presse (10) selon la revendication 1, caractérisée en ce que le mécanisme d'embrayage (98) comprend des moyens structurels pour pousser le second ensemble à cliquet (136) vers ses positions d'allongement et de retrait.

6. Ramasseuse-presse (10) selon la revendication 5, caractérisée en ce que les moyens structurels comprennent un mécanisme de came et des moyens à ressort disposés pour pousser le second ensemble à cliquet (136) vers sa position d'allongement, respectivement sa position de retrait.

7. Ramasseuse-presse (10) selon l'une quelconque des revendications qui précèdent, caractérisée en ce que le second ensemble à cliquet (136) comporte une languette (142) qui peut être engagée avec la portion de barrette menée (154) lorsque le dit second ensemble à cliquet (136) se trouve dans sa position d'allongement.

8. Ramasseuse-presse (10) selon la revendication 7, caractérisée en ce que la languette (142) est reliée, via un élément d'interconnexion (138) à une broche pivotante (134) qui est supportée à rotation libre sur l'élément d'embrayage mené (102).

9. Ramasseuse-presse (10) selon la revendication 8, caractérisée en ce que la languette (142) est montée de manière réglable sur l'élément d'interconnexion (138).
